Europäisches Patentamt

European Patent Office

Office européen des brevets

Veröffentlichungsnummer: **0 309 699**
A2

# EUROPÄISCHE PATENTANMELDUNG

Anmeldenummer: 88112955.5

Int. Cl.⁴ **B21D 41/02**

Anmeldetag: **10.08.88**

Priorität: **28.09.87 DE 3732628**

Veröffentlichungstag der Anmeldung:
**05.04.89 Patentblatt 89/14**

Benannte Vertragsstaaten:
**AT BE CH DE ES FR GB GR IT LI LU NL SE**

Anmelder: **ROTHENBERGER
WERKZEUGE-MASCHINEN GMBH
Gutleutstrasse 167
D-6000 Frankfurt am Main(DE)**

Erfinder: **Rothenberger, Helmut
Am Wiesenhag 8
D-6240 Königstein(DE)**

Vertreter: **Zapfe, Hans, Dipl.-Ing.
Seestrasse 2 Postfach 30 04 08
D-6054 Rodgau-3(DE)**

Aufweitewerkzeug für hohle Werkstücke.

Aufweitewerkzeug für hohle, insbesondere hohlzylindrische, Werkstücke. In einem Werkzeuggrundkörper (2) ist axial verschiebbar ein Spreizdorn (5) gelagert, der durch einen mit einem Handhebel (12) verbundenen Nocken (10, 32) um einen vorgegebenen Hub aus dem Grundkörper (2) heraus gegen einen mit dem Grundkörper (2) verbundenen Satz (15) von Spreizbacken (16) verschiebbar ist. Zur Lösung der Aufgabe, die Spreizbacken innerhalb kürzestes Zeit aus dem Werkstück zurückziehen zu können, um ein Festschrumpfen des Werkstücks auf den Spreizbachen zu vermeiden, ist der Spreizdorn (5 bzw. 31) mit dem Handhebel (12) über ein Zugglied (20) verbunden, dessen Angriffspunkt am Handhebel (12) exzentrisch zur Gelenkachse (7) angeordnet ist. Das Zugglied besteht dabei in vorteilhafter Weise aus mindestens einer Lasche (21 bzw. 33), die einerseits am Handhebel (12), andererseits am Spreizdorn (5 bzw. 31) angelenkt ist bzw. sind.

FIG.1

EP 0 309 699 A2

## Aufweitewerkzeug für hohle Werkstücke

Die Erfindung betrifft ein Aufweitewerkzeug für hohle, insbesondere hohlzylindrische, Werkstücke mit einem Werkzeuggrundkörper mit einer Bohrung, einem in dieser axial verschiebbar gelagerten, aus der Bohrung mit einem äußeren verjüngten Ende herausragenden Spreizdorn, mit einem gleichfalls im Werkzeuggrundkörper mittels einer zur Bohrungsachse senkrechten Gelenkachse schwenkbar gelagerten, durch einen Handhebel betätigbaren Nocken, durch den der Spreizdorn um einen vorgegebenen Hub aus dem Grundkörper heraus gegen einen mit dem Grundkörper verbundenen Satz von Spreizbacken verschiebbar ist.

Ein derartiges Aufweitewerkzeug ist durch die US-PS 4 034 591 bekannt. Der im Werkzeuggrundkörper verschiebbar gelagerte Spreizdorn kann durch die Hebelbetätigung nur in einer Richtung bewegt werden, nämlich in Richtung einer radialen Auswärtsverschiebung der Spreizbacken. Bei einer entgegengesetzten Schwenkbewegung des Handhebels hebt der Nocken vom Spreizdorn dorn ab. Auch kann die den Spreizbacken zugeordnete Ringfeder den Spreizdorn nicht zurückschieben, da wegen der gewünschten niedrigen Betätigungskräfte am Handhebel der Spreizdorn mit einem sehr schlanken kegelförmigen Ende versehen ist, so daß die Anordnung im Bereich der Selbsthemmung arbeitet. Um daher die Spreizbacken aus dem aufgeweiteten Werkstück entfernen zu können, muß die Lockerungsbewegung der Spreizbacken durch Rütteln am Werkzeug bzw. leichte Schläge auf das Werkzeug eingeleitet werden. Während diese Maßnahme bei metallischen Werkstücken, beispielsweise bei Kupferrohren, noch zum Erfolg führt, weil sich das Material nach dem Fließvorgang nicht mehr zusammenziehen kann, scheidet eine solche Lockerung bei solchen Werkstoffen aus, die die Tendenz haben, sich durch "Kriechen" in ihre Ursprungsform zurückzuverformen. Diese Eigenschaft ist beispielsweise bei zahlreichen hochfesten Kunststoffen vorhanden, wie sie heute im Rohrleitungsbau, insbesondere aber für sogenannte Warmwasser-Fußbodenheizungen verwendet werden. Diese Rohre haben ein merkliches Rückstellvermögen und eine entsprechend kurze Rückstellzeit, so daß es jedenfalls nicht ohne weiteres gelingt, bei Verwendung der bekannten Aufweitewerkzeuge die Spreizbacken recht zeitig aus dem Werkstück herauszuziehen. Die aus Kunststoff bestehenden Rohre schrumpfen gewissermaßen auf den Spreizbacken fest.

Soweit in der genannten US-PS 4 034 591 eine Rückstellfeder für den Spreizdorn beschrieben ist, ist deren Anordnung auf einen sogenannten Adapter beschränkt, wie er als Übergangsstück in Verbindung mit größeren Sätzen von Spreizbacken vorgesehen ist. Aber auch eine solche Rückstellfeder wäre im Falle ihrer Unterbringung im Werkzeuggrundkörper nicht geeignet, das bestehende Problem zu lösen. Beim Aufweiten von Kunststoffrohren reicht nämlich die Federkraft der Rückstellfeder nicht aus, um den Spreizdorn in die erforderliche Endstellung zu bringen. Zum einen ist die Wirkung der Feder nur auf einen Teilhub des Spreizdorns beschränkt, zum anderen kann die Feder nicht beliebig kräftig ausgebildet werden, da die Rückstellkräfte naturgemäß beim Spreizhub zusätzlich zu den Aufweitekräften überwunden werden müssen. Auch hier hat die Erfahrung gezeigt, daß Kunststoffrohre infolge ihres schnellen Schrumpfens nach dem Aufweitevorgang auf den Spreizbacken festschrumpfen.

Es ist weiterhin bekannt, Spreizdorne für ähnliche Werkzeuge dadurch mit einem Zwangsrückzug zu versehen, daß man sie durch eine Gewindespindel antreibt. In der Regel wird hierbei die Gewindespindel durch eine sogenannte Ratsche angetrieben. Mittels einer Gewindespindel läßt sich jedoch die Rückzugsbewegung des Spreizdorns nur sehr langsam ausführen. Bei Verwendung einer Ratsche muß deren Antriebsrichtung zusätzlich umgestellt werden, oder die Ratsche muß umgesetzt werden, so daß eine beträchtliche Zeit verstreicht, bevor der Spreizdorn seine Rückzugsbewegung angetreten oder gar beendet hat. Die Folge ist auch hier ein Festschrumpfen von Kunststoffrohren auf den Spreizbacken.

Die bekannten Aufweitewerkzeuge waren daher in aller Regel auf die Verwendung bei metallischen Werkstücken beschränkt.

Zur Notwendigkeit des Aufweitens von Kunststoffrohren sei folgendes ausgeführt:

Sofern derartige Kunststoffrohre im Rohrleitungsbau, insbesondere bei der Herstellung von Warmwasser-Fußbodenheizungen verwendet werden, müssen Abschnitte solcher Rohre von endlicher Länge miteinander verbunden werden. Dies geschieht durch sogenannte doppelseitige Nippel, die an beiden Enden mit einer Oberflächenprofilierung versehen sind, die im Axialschnitt ein Sägezahnprofil besitzt, ähnlich, wie dies von Anschlußnippeln für Gartenschläuche her bekannt ist. Da der Innenquerschnitt dieser Nippel den Innenquerschnitt der miteinander zu verbindenden Kunststoffrohre möglichst wenig unterschreiten soll und die Nippel auch zwischen den "Sägezähnen" noch eine endliche Wandstärke haben müssen, macht dies eine entsprechend starke Aufweitung der Kunststoffrohre an ihren Enden erforderlich, und zwar auf einer solchen Tiefe, die etwa der halben Länge des Nippels entspricht. Bei der Herstellung einer solchen Verbindung macht man ja gerade von der Eigenschaft solcher Kunststoffrohre Gebrauch, auf den Nippeln absolut flüssigkeitsdicht und mechanisch fest innerhalb kurzer Zeit aufzuschrumpfen. Dieses für die Herstellung der Verbindung von Nippel und Kunststoff-Rohrleitung günstige Schrumpfverhalten des Kunststoffs wirkt sich nun beim Aufweitevorgang selbst äußerst nachteilig aus, indem nämlich die Bedienungsperson gezwungen ist, sehr schnell zu arbeiten und nach dem Aufweiten des Rohrendes nicht nur das Aufweitewerkzeug aus dem Rohrende zu entfernen, sondern auch noch das eine Ende des Nippels einzusetzen, dessen anderes Ende in der Hälfte aller Fälle bereits mit einem längeren Rohrstück verbunden ist. Es ist aufgrund des beschriebenen Verhaltens der betreffenden Werkstoffe beispielsweise auch nicht möglich, eine größere Anzahl von aufgeweiteten Kunststoffrohren auf Vorrat zu fertigen, wie dies beispielsweise bei Metallrohren ohne weiteres möglich wäre, die nachträglich allerdings flüssigkeitsdicht nur durch Löten miteinander verbunden werden können.

Der Erfindung liegt daher die Aufgabe zugrunde, ein Aufweitewerkzeug der eingangs beschriebenen Gattung dahingehend zu verbessern, daß seine Spreizbacken nach dem Aufweitevorgang innerhalb kürzester Zeit aus dem Werkstückende herausgezogen werden können.

Die Lösung der gestellten Aufgabe erfolgt bei dem eingangs beschriebenen Aufweitewerkzeug erfindungsgemäß dadurch, daß der Spreizdorn mit dem Handhebel über ein Zugglied verbunden ist, dessen Angriffspunkt am Handhebel exzentrisch zur Gelenkachse angeordnet ist.

In besonders vorteilhafter Weise besteht das Rückzugsglied aus mindestens einer Lasche, die über einen ersten Gelenkzapfen mit dem Handhebel und über einen zweiten Gelenkzapfen mit dem Spreizdorn verbunden ist.

Durch ein solches Rückzugsglied kann der Spreizdorn bereits bei Beginn der Rückwärtsbewegung des Handhebels zwangsweise aus dem Satz von Spreizbacken herausgezogen werden, so daß nunmehr die Ringfeder oder Ringfedern der Spreizbacken ausreichend ist bzw. sind, um den Satz von Spreizbacken auf seinen minimalen Außendurchmesser zurückzuführen. Jegliches Schütteln, Rütteln oder Klopfen am bzw. auf den Werkzeuggrundkörper ist infolgedessen vollkommen überflüssig: Das Aufweitewerkzeug kann bereits während der Rückwärtsbewegung des Handhebels aus dem Werkstück herausgezogen werden, so daß auch die weiter oben beschriebene Muffen- oder Nippelverbindung blitzschnell hergestellt werden kann. Der Schrumpfvorgang setzt sich hierbei auch noch nach dem Einführen des Nippels fort, so daß eine absolut dichte und mechanisch feste, druckbeständige Abdichtung erzielt werden kann.

Bei einem Ausführungsbeispiel sind der Nocken und das dem Nocken zugekehrte Ende des Spreizdorns mit je einer mittigen schlitzförmigen Ausnehmung versehen, die beide miteinander fluchten und in denen das jeweilige Ende der Lasche gelagert ist.

Bei einem anderen vorteilhaften Ausführungsbeispiel sind der Nocken und das dem Nocken zugekehrte Ende des Spreizdorns auf beiden Seiten von planparallelen Flächen begrenzt, die jeweils miteinander fluchten und auf denen die jeweiligen Enden der paarweise angeordneten Laschen schwenkbar aufliegen.

Bei beiden Ausführungsbeispielen läßt sich die mittige Lasche oder lassen sich die beiden seitlichen Laschen ohne zusätzlichen Platzbedarf, d.h. ohne Vergrößerung der Außenabmessungen des Werkzeugs in dieses integrieren. Damit bleiben die Vorteile des bekannten Aufweitewerkzeugs auch beim Erfindungsgegenstand in vollem Umfange erhalten.

Es ist dabei besonders vorteilhaft, wenn die Achse des ersten, im Handhebel gelagerten Gelenkzapfens bei am weitesten aus dem Werkzeuggrundkörper herausgeschobenem Spreizdorn in Richtung auf den Handhebel seitlich neben einer Ebene E-E liegt, in der sich die Gelenkachse des Steuerkörpers und die Achse des zweiten, den Spreizdorn durchdringenden Gelenkzapfens befinden.

Die Achsen der Gelenkzapfen bzw. der Gelenkachse befinden sich auf diese Weise bei Beginn der Rückzugsbewegung des Spreizdorns an den Ecken eines Dreiecks, so daß die Rückzugsbewegung nicht etwa aus einer Totpunktlage mit der Geschwindigkeit 0, sondern mit einer merklichen Geschwindigkeit beginnt, so daß die Rückstellbewegung der Spreizbacken innerhalb allerkürzester Zeit freigegeben wird.

Zwei Ausführungsbeispiele des Erfindungsgegenstandes werden nachfolgend anhand der Figuren 1 bis 4 näher erläutert.

Es zeigen:

Figure 1 einen Axialschnitt durch ein vollständiges Aufweitewerkzeug mit einem mittig angebrachten Rückzugsglied und mit einem aufgeschraubten Satz von Spreizbacken,

Figur 2 eine Draufsicht auf den Gegenstand von Figur 1,

Figur 3 einen teilweisen Axialschnitt durch ein Aufweitewerkzeug mit zwei seitlichen Rückzugsgliedern unter Weglassung des Satzes von Spreizbacken, und

Figur 4 eine Draufsicht auf den Gegenstand von Figur 3.

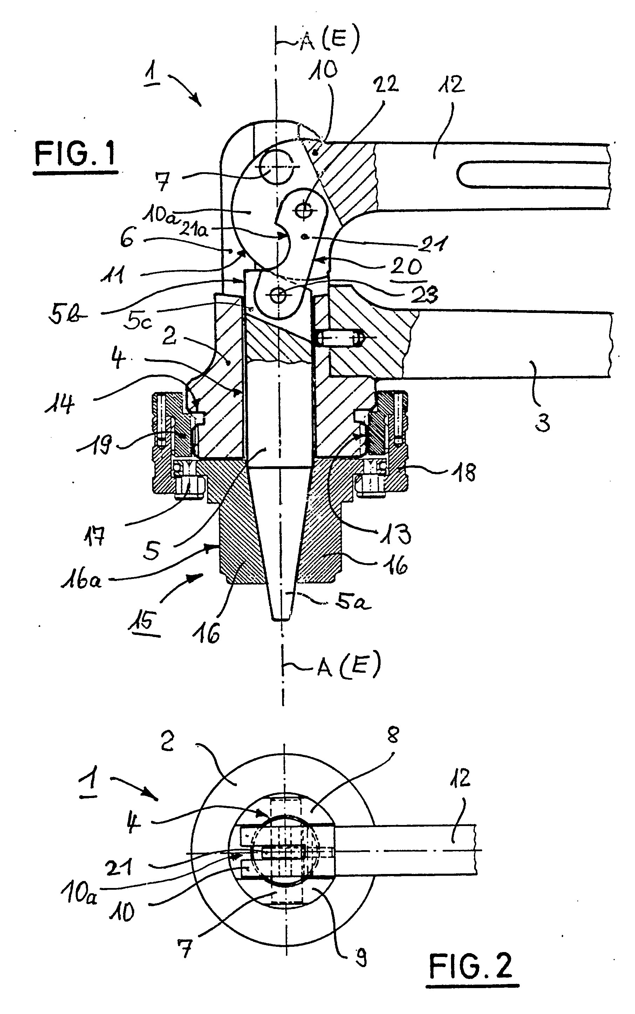

In den Figuren 1 und 2 ist ein Aufweitewerkzeug 1 dargestellt, das einen ursprünglich als Drehteil ausgebildeten Werkzeuggrundkörper 2 besitzt, an dem seitlich ein radial abstehender erster Handhebel 3 befestigt ist. Der Werkzeuggrundkörper 2 besitzt eine Achse A-A und eine hierzu konzentrische Bohrung 4, die der axial verschiebbar ein Spreizdorn 5 gelagert ist, dessen eines Ende 5a kegelförmig verjüngt ausgebildet ist und aus dem Werkzeuggrundkörper 2 herausragt.

Das dem Ende 5a des Spreizdorns 5 abgekehrte Ende des Werkzeuggrundkörpers 2 ist jenseits des Handhebels 3 mit einem parallelwandigen Schlitz 6 versehen, in den die Bohrung 4 mündet. Beiderseits des Schlitzes 6 sind zwei Wangen 8 und 9 stehen geblieben (Figur 2), die gewissermaßen den Lagerbock für einen zweiten Handhebel 12, an den im Breich des Lagers ein Nocken angeformt ist.

Dieser Handhebel 12 ist mittels einer Gelenkachse 7 schwenkbar in dem Schlitz 6 gelagert, wobei die Mittenachse der Gelenkachse 7 senkrecht zur Achse A-A verläuft und diese durchdringt. Der Nocken 10 besitzt eine zur Gelenkachse 7 exzentrisch verlaufende Steuerfläche 11, die auf das obere, an dieser Stelle leicht abgeschrägte Ende 5b des Spreizdorns 5 einwirkt.

Der Nocken 10 ist einstückig mit dem zweiten Handhebel 12 verbunden, der seitlich aus dem Schlitz 6 herausragt. Beide Handhebel 3 und 12 besitzen an ihren hier nicht dargestellten Enden Handgriffe, so daß sich die beiden Handhebel in Bezug auf den Werkzeuggrundkörper 2 wie eine Zange betätigen lassen. Figur 1 zeigt die beiden Handhebel 3 und 12 in ihrer einander am weitestens angenäherten Stellung. Es ist jedoch erkennbar, daß sich der zweite Handhebel 12 aus der gezeichneten Stellung entgegen dem Uhrzeigersinn um einen Schwenkwinkel von mehr als 90 Grad. d.h. über die Achse A-A hinaus verschwenken läßt. Die Steuerkurve 11 hat dabei in Bezug auf die Gelenkachse 7 eine solche geometrische Form, daß dem Fließverhalten des Werkstücks und dem Verlauf der Betätigungskräfte in Abhängigkeit von der Winkelstellung des Handhebels 12 optimal Rechnung getragen wird.

Der Werkzeuggrundkörper 2 besitzt an seinem dem Ende 5a des Spreizdorns 5 zugekehrten Ende ein Gewinde 13 und eine Ringschulter 14 für das Ansetzen eines Satzes 15 von einzelnen Spreizbacken 16, die auf den Umfang des Spreizdorns 5 verteilt sind. Die Spreizbacken 16 sind durch Niete 17 in radialer Richtung verschiebbar in dem nach innen gerichteten Flansch einer Überwurfmutter 18 gehalten, die durch einen Adapterring 19 mit dem Gewinde 13 und gegen die Ringschulter 14 verschraubt ist. Es ergibt sich aus einer Betrachtung der Figur 1, daß die sogenannten Arbeitsflächen 16a des Spreizbackensatzes 15 bei einem Einschieben des kegelförmigen Endes 5a in die Spreizbacken 16 radial nach außen geschoben werden.

Der Handhebel 12 ist nunmehr erfindungsgemäß über ein Rückzugsglied 20 mit dem Spreizdorn 5 verbunden. Bei dem Ausführungsbeispiel nach den Figuren 1 und 2 besteht dieses Rückzugsglied 20 aus einer Lasche 21, die über einen ersten Gelenkzapfen 22 mit dem Nocken 10 und über einen zweiten Gelenkzapfen 23 mit dem Spreizdorn 5 verbunden ist. Zu diesem Zweck sind der Nocken 10 und das der Steuerkurve 11 zugekehrte Ende 5b des Spreizdorns 5 mit je einer mittigen schlitzförmigen Ausnehmung 10a bzw. 5c versehen, die beide miteinander fluchten, und in denen das jeweilige Ende der Lasche 21 gelagert ist. Da die Lasche 21 im Bereich der oberen End stellung des Handhebels 12 gegen die Gelenkachse 7 bewegt wird, besitzt die Lasche 21 eine seitliche Ausnehmung 21a, so daß sich die Lasche 21 gewissermaßen um die Gelenkachse 7 herumlegen kann.

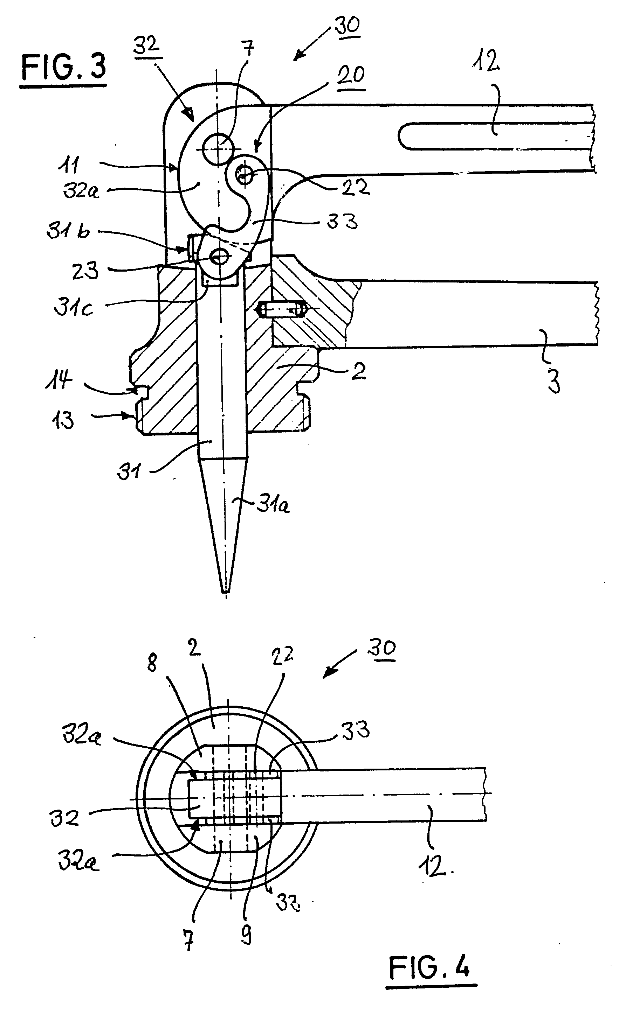

Die Figuren 3 und 4 zeigen ein weiteres Ausführungsbeispiel, dessen wesentliche Elemente im Umfange der Ansprüche 1 und 2 mit dem Ausführungsbeispiel nach den Figuren 1 und 2 übereinstimmen, so daß hier nur die wesentlichen Bezugszeichen wiederholt und insbesondere auf die Abweichungen eingegangen werden soll.

Das Aufweitewerkzeug 30 nach den Figuren 3 und 4 besitzt einen Spreizdorn 31 mit einem kegelförmig verjüngten Ende 31a und einem Ende 31b, das der Steuerfläche 11 zugekehrt ist. Diese Steuerfläche 11 ist nunmehr Teil eines Nockens 32, der zwar in analoger Weise wie in den Figuren 1 und 2 gelagert ist, jedoch auf beiden Seiten von zurückgesetzten planparalellenFlächen grenzt ist. (Figur 4). Auch der Spreizdorn 31 ist auf diametral gegenüberliegenden Seiten von zwei planparallelen Flächen 31c begrenzt, wobei die Flächen 31c und 32a jeweils paarweise miteinander fluchten. Auf diesen Flächen liegen auch die jeweiligen Enden der paarweise angeordneten Laschen 33 schwenkbar auf, die in diesem Fall das Rückzugsglied 20 bilden. Die Laschen 33 sind in analoger Weise mittels Gelenkzapfen 22 bzw. 23 am Nocken 32 bzw. am Spreizdorn 31 gelagert.

Bei beiden Ausführungsbeispielen ist die Anordnung so getroffen, daß die Achse des ersten, im Nocken 10 bzw. 32 gelagerten Gelenkzapfens 22 bei am weitesten aus dem Werkzeuggrundkörper 2 herausgeschobenem Spreizdorn in Richtung auf den Handhebel seitlich neben einer Ebene E-E liegt, in der sich die Gelenkachse 7 des Nockens 10,32 und die Achse des zweiten, den Spreizdorn 5 bzw. 31 durchdringenden Gelenkzapfens 23 befinden. Durch diese spezielle Lage der untereinander parallelen Gelenkachsen bzw. Gelenkzapfen wird erreicht, daß der Spreizdorn 5 bzw. 31 bereits bei Beginn der Rückschwenkbewegung des Handhebels 12 zwangsweise mit einer endlichen Rückzugsgeschwindigkeit bewegt wird. Es versteht sich hierbei, daß die Lage aller Gelenkstellen relativ zur Steuerfläche 11 so gewählt ist, daß die lediglich zur Zwangsrückführung benötigten Laschen 21 bzw. 33 beim Aufweitevorgang nicht auf Druck beansprucht werden. Für die Druckübertragung ist vielmehr ausschließlich die Steuerfläche 11 maßgebend.

## Ansprüche

1. Aufweitewerkzeug für hohle, insbesondere hohlzylindrische, Werkstücke mit einem Werkzeuggrundkörper mit einer Bohrung, einem in dieser axial verschiebbar gelagerten, aus der Bohrung mit einem äußeren verjüngten Ende herausragenden Spreizdorn, mit einem gleichfalls in Werkzeuggrundkörper mittels einer zur Bohrungsachse senkrechten Gelenkachse schwenkbar gelagerten, durch einen Handhebel betätigbaren Nocken, durch den der Spreizdorn um einen vorgegebenen Hub aus dem Grundkörper heraus gegen einen mit dem Grundkörper verbundenen Satz von Spreizbacken verschiebbar ist, dadurch gekennzeichnet, daß der Spreizdorn (5 bzw. 31) mit dem Handhebel (12) über ein Zugglied (20) verbunden ist, dessen Angriffspunkt am Handhebel (12) exzentrisch zur Gelenkachse (7) angeordnet ist.

2. Aufweitewerkzeug nach Anspruch 1, dadurch gekennzeichnet, daß das Zugglied (20) aus mindestens einer starren Lasche (21; 33) besteht, die einerseits am Handhebel (12) und andererseits am Spreizdorn (5, 31) angelenkt ist.

3. Aufweitewerkzeug nach Anspruch 2, dadurch gekennzeichnet, daß der Nocken (10) und das dem Nocken (10) zugekehrte Ende (5b) des Spreizdorns (5) mit je einer mittigen schlitzförmigen Ausnehmung (10a; 5c) versehen sind, die beide miteinander fluchten und in denen die Enden der Lasche (21) geführt sind.

4. Aufweitewerkzeug nach Anspruch 2, dadurch gekennzeichnet, daß der Nocken (32) und das dem Nocken (32) zugekehrte Ende (31b) des Spreizdorns (31) durch zwei Laschen (33) verbunden sind, die an je zwei planparallenen Flächen (32a; 31c) am Handhebel (12 und am Spreizdorn (31) angelenkt sind.

5. Aufweitewerkzeug nach Anspruch 2, dadurch gekennzeichnet, daß die Achse des ersten, im Handhebel (12) gelagerten Gelenkzapfens (22) bei am weitesten aus dem Werkzeuggrundkörper (2) herausgeschobenem Spreizdorn (5 bzw. 31) in Richtung auf den Handhebel (3) seitlich neben einer Ebene (E-E) liegt, in der sich die Gelenkachse (7) des Steuerkörpers und die Achse des zweiten, den Spreizdorn (5 bzw. 31) durchdringenden Gelenkzapfens (23) befinden.

FIG.1

FIG.2

FIG. 3

FIG. 4